# EUROPEAN PATENT SPECIFICATION

(11) **EP 1 427 062 B1**
(45) Date of publication and mention of the grant of the patent: **16.12.2009**
(21) Application number: 02798826.0
(22) Date of filing: 12.09.2002
(51) Int. Cl.: H01R 12/18, H01R 12/22, H01R 12/32, G06K 17/00, H01R 13/00

(54) **ELECTRIC CONNECTOR**
ELEKTRISCHER VERBINDER
CONNECTEUR ELECTRIQUE

(30) Priority: 13.09.2001 JP 2001278487
(43) Date of publication of application: 09.06.2004
(73) Proprietor: J.S.T. Mfg. Co., Ltd., Osaka-shi, Osaka 542-0081 (JP)
(72) Inventor: YOKOYAMA, Hiromasa c/o Tokyo Engineering Center, Kohoku-ku Yokohama-shi, Kanagawa 222-0001 (JP)
(74) Representative: W.P. Thompson & Co.
(86) International application number: PCT/JP2002/009321
(87) International publication number: WO 2003/026073

(56) References cited:
- EP-A- 0 889 493
- EP-A- 0 949 724
- EP-A1- 0 926 769
- EP-A1- 0 930 577
- EP-A2- 0 949 724
- WO-A1-96/14671
- DE-A1- 4 243 076
- JP-U- 52 074 459
- US-A- 5 463 210
- US-A- 5 800 200
- US-A- 5 924 881
- US-A- 6 129 558

## Description

### TECHNICAL FIELD

The present invention relates to an electrical connector mounted to a circuit board disposed in an apparatus body such as of a cellular phone and adapted to retain a memory card, thereby establishing electrical connection between the memory card and a circuit component in the apparatus body.

### Background Art

There has been known an electrical connector for establishing connection between a user-installable external memory card and a circuit component in an apparatus body such as of a cellular phone.

The electrical connector includes a connector housing formed of a resin and accommodating the memory card, and a plurality of metal contacts (connecting terminals) fixed in the connector housing as one piece.

Respective one end of the connecting terminals in the connector housing is connected with each electrode of the circuit board in the apparatus body by means of solder or the like. When the memory card is inserted in the connector housing in this state, terminals of the memory card come into contact with predetermined portions of the connecting terminals in the connector housing (such as bellows-folded portions). Thus is established the electrical connection between the memory card and the circuit component in the apparatus body.

EP 0 949 724 A2 discloses an electrical connector with an insulating housing and electrical contacts which are fastened to the housing, for electrically connecting a first circuit board and a substantially parallel second circuit board. The contacts have cantilever contact sections which extend from fastening sections cast in the housing into openings between housing partition walls and which resiliently engage an undersurface of the first circuit board with arcuate surfaces stamped and formed from a metal plate. The cantilever contact sections are bent from the fastening sections and have supporting-point members which bear on the second circuit board when the cantilever contact sections are flexed by contact with the first circuit board. The claims are delimited against this document.

US 5,800,200 discloses a connector for connecting contacts on the surface of a smart card to a read/write device, which includes an insulative housing that holds a plurality of electrical contacts that have card-engaging blades for engaging pads on a smart card. Each contact has a wire-engaging end with an insulation displacement fork for penetrating insulation of an electrical flat cable to connect to a cable wire that connects to a read/write device. In one connector, a support part of the housing clamps a fixing part of each contact against a cover while a deflectable linking branch of the contact extends at an upward incline to a bend that extends to the fork. A tool moved down through an opening in the cover can deflect the linking branch to a deflected position, with the fork then projecting down through a cable. A shoulder on the housing then resists upward fork movement. The cable can be supported by a cable-receiving wall fixed to the support part.

DE 4243076 discloses an apparatus for establishing electrical connection between a printed circuit board and a chipcard such as a SIM-card includes: a support for carrying a plurality of contacts for carrying electrical signals between the printed circuit board and the SIM-card; a housing onto which is attached on a bottom side thereof the SIM-card; and a guide means, mounted on the housing independently of the support and arranged so as to be spaced from the support, for guiding the SIM-card onto the support. The dimensions of the support are arranged to be smaller than the dimensions of the SIM-card so as to increase the available space on the surface of the printed circuit board.

US 5,463,210 discloses an IC card loading detecting apparatus utilizing an input/output terminal portion of an IC card which houses therein a central processing unit (CPU) has a ground contact and a detection sensor contact provided on an interface portion of a terminal equipment. The detection sensor contact is brought in contact with a ground terminal of an input/output terminal portion of an IC card after the ground contact is brought in contact with the ground terminal when the IC card is inserted into the equipment and is disconnected from the ground terminal before the ground contact is disconnected from the ground terminal when said IC card is ejected from the equipment.

EP0889493 discloses an electrical switch assembly characterized by a first switch contact stamped and formed of sheet metal material and including a base and an integral first contact arm folded into juxtaposition over the base. The contact arm has an upwardly facing contact surface. A second switch contact arm is stamped and formed of sheet metal material and includes a base and an integral spring contact arm folded into cantilevered position over the base. The spring contact arm has a distal end folded thereunder to define a downwardly facing contact surface opposing the upwardly facing contact surface and spaced therefrom in a normally open condition of the switch assembly.

US6129558 discloses a connector for a printed circuit board including a board-shaped housing with windows and connecting terminals arranged for the windows. An intermediate part of each connecting terminal is fixed to a housing part at an edge of the window, and a contacting part of the connecting terminal is arranged so that it can undergo elastic deformation in the window in the direction of thickness of the housing near the top of the housing. The external end of the connecting terminal is formed as a lead, and the connecting terminal is provided with a reinforcing lead that extends from the intermediate part toward the bottom of the housing in the window. If necessary, a reinforcing frame is embedded in the housing.

US5924881 discloses an electrical connector for an IC card incorporated in an IC card reader for reading and writing data from and onto the IC card. A fixed contact piece has a main body extending through both ends of a mounting portion of the connector so as to be fixed to the mounting portion, and both ends as circuit connection terminals. The fixed contact piece further has an L-shaped projection piece having a sufficient elasticity. The contact portion of the L-shaped projection piece and the contact portion of a movable contact piece intersect substantially in a "cross-shaped" figure and contact each other in point contact. With this construction, a complete electrical connection between contact pieces is achieved and the freedom in layout of printed wiring on a base plate is increased.

Mechanical connection between the circuit board in the apparatus body and the connector housing is established by means of the solder provided at the respective one end of the connecting terminals (that is, the soldered portions serve the dual purposes of establishing the electrical connection and the mechanical connection).

However, opposite ends of the connecting terminals from their individual ends connected with the circuit board in the apparatus body are in a free state as fixed nowhere. Hence, the arrangement involves a risk that repeated insertion and removal of the memory card may cause fatigue of the aforesaid connected portions so that the connecting terminals and the connector housing integral therewith may be lifted off from the circuit board in the apparatus body.

As a countermeasure against such a lift-off of the connector housing, for example, it may be contemplated to establish a zigzag connection between the connecting terminals and the circuit in the apparatus body, the connection in which a respective pair of adjoining connecting terminals are connected alternately at the one end and the other end thereof. However, such a zigzag connection leads to a difficult circuit-pattern layout in the apparatus body, hindering the downsizing of the apparatus.

In view of the foregoing, it is an object of the invention to provide an electrical connector adopting a simplified construction such that the electrical connector mounted in the apparatus body may be prevented from encountering lift-off from the circuit board in the apparatus body.

### DISCLOSURE OF THE INVENTION.

According to the invention, there is provided an electrical connector as defined by the claims.

According to the arrangement, the connecting terminal in use is fixed to the circuit board in at least 2 places. Thus the invention provides an electrical connector which is stably connected to the circuit board and does not encounter easy lift-off from the circuit board in spite of repeated insertion/removal of the memory card.

In another aspect of the invention, a plurality of the connecting terminals may be fixed in the connector housing whilst at least one of the fixed terminals may include at least 2 securing portions for fixing the terminal to the circuit board. While a plurality of the above connecting terminals are normally provided in the electrical connector, at least one of the connecting terminals need to have the structure according to claim 1 in order to achieve the object of the invention. As a matter of course, more of the connecting terminals (e.g., a half thereof) may have the structure according to claim 1.

The connecting terminal may include at least 2 securing portions for fixing the terminal to the circuit board to which the electrical connector is mounted, the 2 securing portions being located in anteroposterior relation (i.e. from front to back) with respect to the portion capable of electrically contacting the memory card. Unlike the conventional cantilevered structure, the above structure permits the connecting terminal to be connected to the circuit board via the portions on the opposite sides of the portion capable of electrically contacting the memory card. This further enhances the stable and positive connection between the connecting terminals and the circuit board. Therefore, the electrical connector is less susceptible to easy lift-off from the circuit board associated with repeated insertion/removal of the memory card.

BRIEF DESCRIPTION OF THE DRAWINGS
Fig.1A is a top plan view showing an electrical connector 1 according to the invention, whereas Fig.1B is a sectional view taken on the line X-X in Fig.1A;
Fig.2 is a bottom plan view showing the electrical connector 1 of the invention;
Fig.3A is a top plan view showing a first connecting terminal, whereas Fig.3B is a side view thereof; and
Fig.4 is a sectional view showing the electrical connector 1 under service condition.

### BEST MODE FOR CARRYING OUT THE INVENTION

A mode for carrying out the invention will hereinbelow be described in details with reference to the accompanying drawings.

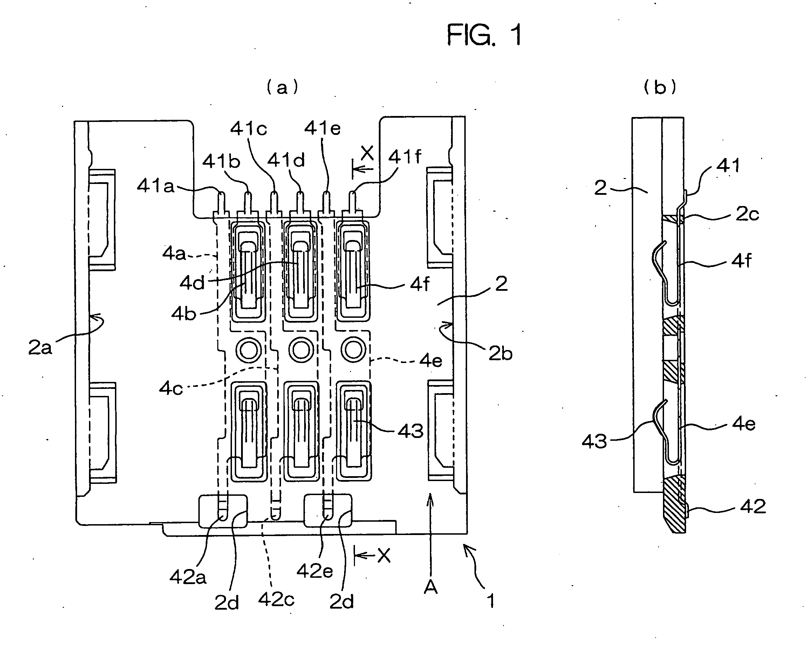

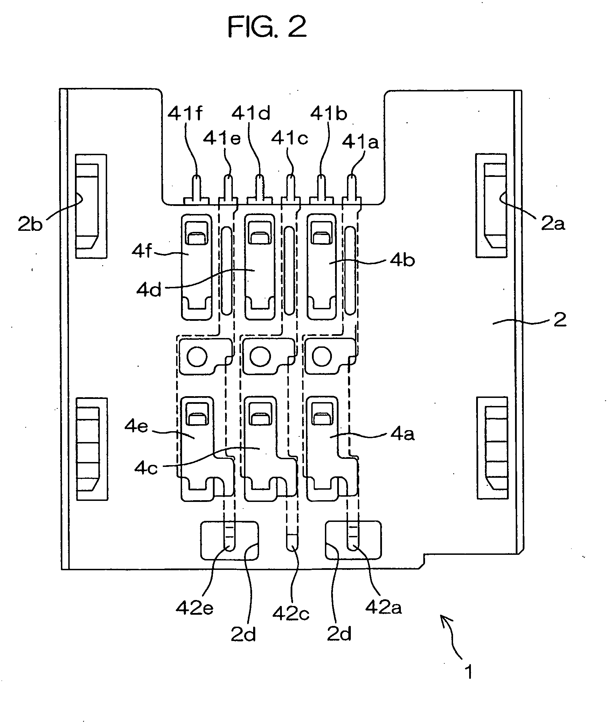

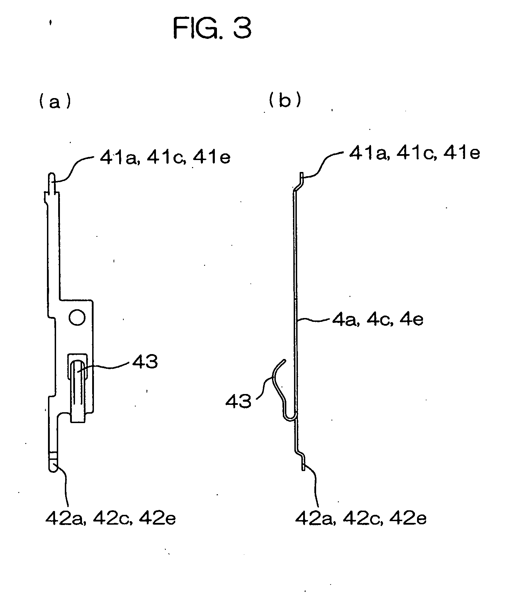

Fig.1A is a top plan view showing an electrical connector 1 of the invention, whereas Fig.1B is a sectional view thereof. Fig.2 is a bottom plan view showing the electrical connector 1 of the invention. Fig.3A is a top plan view showing a first connecting terminal, whereas Fig.3B is a sectional view thereof.

The electrical connector 1 is molded from an insulating plastic material with metal connecting terminals inserted therein. A portion consisting of the plastic material is referred to as a connector housing 2.

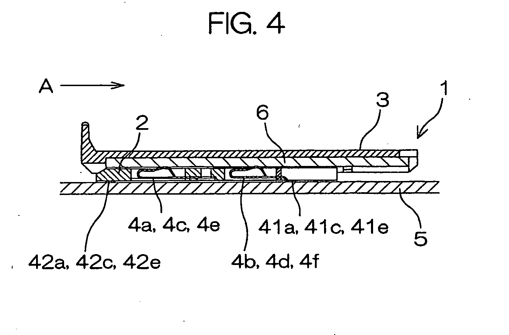

The connector housing 2 is formed in the shape of a flat plate, which is formed with grooves 2a, 2b on opposite sides thereof for guiding the insertion of a card holder 3 (see Fig.4). The card holder 3 retains a memory card 6 (see Fig.4) such as a SIM (Subscriber Identity Module) card.

The connector housing 2 has 6 connecting terminals 4a to 4f mounted to one side thereof. Exposed portions at proximal ends of the connecting portions 4a to 4f (the upper side as seen in Fig.1) are folded to define respective steps for connection with a circuit board in an apparatus body (hereinafter, the folded portions will be referred to as "proximal connecting portions 41a to 41f" or collectively as a "proximal connecting portion 41"). The proximal connecting portions 41a to 41f are cream-soldered to metal terminals of a circuit board 5 (see Fig.4). Besides the soldering, any other method such as ultrasonic depositioning may be used to bond the connecting portions to the metal terminals.

The connecting terminals 4a to 4f are classified into two types including first connecting terminals 4a, 4c, 4e and second connecting terminals 4b, 4d, 4f. The first and second connecting terminals are alternately arranged in the connector housing 2. The first connecting terminals 4a, 4c, 4e are formed in such a length as to reach a lower edge of the connector housing 2 (the lower edge as seen in Fig. 1), whereas the second connecting terminals 4b, 4d, 4f are formed in about a half the length of the first connecting terminals 4a, 4c, 4e.

As shown in the sectional view (Fig. 1B), the second connecting terminals 4b, 4d, 4f have their portions close to the proximal connecting portions 41b, 41d, 41f embedded in a resin 2c of the connector housing 2 so as to be retained by the connector housing. The second connecting terminals have their distal ends folded in a bellows shape.

In contrast, the first connecting terminals 4a, 4c, 4e are retained by the connector housing 2 as mostly embedded in the resin 2c of the connector housing except for the proximal connecting portions 41a, 41c, 41e and distal connecting portions thereof (to be described hereinlater), as shown in the top plan view (Fig.1A).

The first connecting terminals 4a, 4c, 4e each have a portion 43 thereof folded in the bellows shape, the folded portion extending from place about 3/4 of the overall length of the connecting terminal from the proximal end thereof. As shown in the side views of Figs.1B and 3B, projecting portions defined by distal ends of unfolded base metal portions of the first connecting terminals are so folded as to define respective steps to be soldered to the circuit board, similarly to the aforesaid proximal connecting portion 41. The folded projecting portions at the distal ends will hereinafter be referred to as "distal connecting portions 42a, 42c, 42e" or collectively as a "distal connecting portion 42". The distal connecting portion 42a and the proximal connecting portion 41a are located in an anteroposterior relation with respect to an insertion direction A (see Fig.1A). The distal connecting portion 42c and the proximal connecting portion 41c are also aligned with respect to the insertion direction A. The distal connecting portion 42e and the proximal connecting portion 41e are also located in the anteroposterior relation with respect to the insertion direction A.

The bellows-shape portions of the 6 connecting terminals 4a to 4f are all folded in a direction parallel to the insertion direction A of the memory card. A fold-back of the bellows shape is located on a side from which the memory card is inserted.

The distal connecting portions 42a, 42e of the first connecting terminals 4a, 4e on the laterally opposite sides are folded as exposed front respective windows 2d formed in the connector housing 2. On the other hand, the first connecting terminal 4c, located centrally between the above first connecting terminals, is not provided with a window. This is because if all the connecting terminals 4a, 4c, 4e are to be exposed, the connector housing 2 must be formed with 3 sequential windows for exposing the terminals, which in turn, reduces the strength of the connector housing 2. However, as seen in the bottom plan view (Fig.2), the distal connecting portion 42c of the central first connecting terminal 4c is also folded to be exposed from a bottom surface of the connector housing 2, thus adapted to be connected with the circuit board.

Fig.4 is a sectional view showing the electrical connector 1 under service condition. The insertion direction of a card is represented by an arrow A. The electrical connector 1 has the proximal connecting portion 41 and the distal connecting portion 42 thereof connected with the metal terminals of the circuit board 5, thereby being fixed to the circuit board 5 in the apparatus body. The metal terminal of the circuit board 5 in connected relation with the proximal connecting portion 41 must be connected with a circuit component of the apparatus body, whereas the metal terminal in connected relation with the distal connecting portion may not necessarily be connected with a circuit component of the apparatus body or may be electrically isolated from the others. This is because an electrical connection established at one place of the connecting terminal fully serves the purpose. Conversely, an arrangement may be made such that the metal terminal of the circuit board 5 in connected relation with the distal connecting portion 42 is connected with the circuit component of the apparatus body while the metal terminal in connected relation with the proximal connecting portion 41 is not connected with the circuit component of the apparatus body.

When the card holder 3 retaining the SIM card 6 is inserted into the connector housing 2 of the electrical connector 1 having the above structure, a terminal portion of the SIM card 6 comes into contact with the respective bellows-folded portions of the first and second connecting terminals 4a to 4f so that the electrical connection is established between the SIM card and the circuit of the apparatus body. Thus, the apparatus body is allowed to function.

The first connecting terminals 4a, 4c, 4e have not only their proximal connecting portions 41a, 41c, 41e but also their distal connecting portions 41a, 42c, 42e connected with the circuit board. Furthermore, the first connecting terminals 4a, 4c, 4e are retained by the connector housing as embedded in the resin thereof. Therefore, the connector housing 2 itself is prevented from encountering lift-off from the circuit board 5.

Although the second connecting terminals 4b, 4d, 4f have the conventional cantilevered bellows structure, they are believed to cause no problem because the first connecting terminals 4a, 4c, 4e prevent the connector housing 2 from being lifted off from the circuit board.

While the mode of carrying out the invention has been fully described, it is to be noted that the implementation of the invention is not limited to the foregoing mode of the invention but various changes or modifications may be made thereto within the scope of the invention.

## Claims

1. An electrical connector (1) for connecting a memory card (6) to a circuit board (5),
said electrical connector (1) comprising
a housing (2) for receiving and retaining the memory card (6),
and a connecting terminal (4) fixed in the housing (2) for establishing electrical connection between a contact of the memory card (6) and a circuit component of the circuit board (5),
the connecting terminal (4) having a portion (43) capable of electrically contacting the contact of the memory card (6) when retained by the housing (2),
the connecting terminal (4) comprising at least two spaced apart securing portions (41a, 42a) for fixing the terminal (4) to the circuit board (5),
**characterised in that**
the two securing portions (41a, 42a) are folded to define steps from a main body of the connecting terminal (4) for connection with the circuit board (5),
the portion (43) capable of electrically contacting the contact of the memory card (6) is a portion of the connecting terminal (4) that is folded in a direction parallel to the insertion direction (A) of the memory card (6), and
the portion (43) that is folded in the direction parallel to the insertion direction (A) of the memory card (6) is located between two of the spaced apart securing portions (41a, 42a).

2. An electrical connector (1) according to claim 1, comprising a plurality of connecting terminals (4) fixed in the connector housing (2) wherein at least one of the connecting terminals (4) includes at least two securing portions (41a, 42a) for fixing the terminal (4) to the circuit board (5).

3. An electrical connector (1) according to claim 1 or claim 2, further comprising a circuit component,
wherein out of at least the two securing portions (41a, 42a), a portion (41a) located rearwardly with respect to the insertion direction (A) of the memory card (6) is electrically connected to the circuit component,
whereas a portion (42a) located forwardly with respect to the insertion direction (A) of the memory card (6) is not electrically connected to the circuit component.

## Patentansprüche

1. Elektrischer Verbinder (1) zum Verbinden einer Speicherkarte (6) mit einer Leiterplatte (5),
wobei der genannte elektrische Verbinder (1) Folgendes umfasst:
ein Gehäuse (2) zum Aufnehmen und Halten der Speicherkarte (6),
und einen Verbindungsanschtuss (4), der in dem Gehäuse (2) befestigt ist, zum Herstellen einer elektrischen Verbindung zwischen einem Kontakt der Speicherkarte (6) und einer Schaltungskomponente der Leiterplatte (5),
wobei der Verbindungsanschluss (4) einen Abschnitt (43) aufweist, der mit dem Kontakt der Speicherkarte (6) in elektrischen Kontakt kommen kann, wenn sie von dem Gehäuse (2) gehalten wird,
wobei der Verbindungsanschluss (4) wenigstens zwei beabstandete Befestigungsabschnitte (41a, 42a) zum Befestigen des Anschlusses (4) an der Leiterplatte (5) umfaßt,
**dadurch gekennzeichnet, dass**
die beiden Befestigungsabschnitte (41a, 42a) so gefaltet sind, dass sie Stufen von einem Hauptkörper des Verbindungsanschlusses (4) für eine Verbindung mit der Leiterplatte (5) definieren,
wobei der Abschnitt (43), der mit dem Kontakt der Speicherkarte (6) in elektrischen Kontakt kommen kann, ein Abschnitt des Verbindungsanschlusses (4) ist, der in einer Richtung parallel zur Einführungsrichtung (A) der Speicherkarte (6) gefaltet ist, und
wobei sich der Abschnitt (43), der in der Richtung parallel zur Einführungsrichtung (A) der Speicherkarte (6) gefaltet ist, zwischen zwei beabstandeten Befestigungsabschnitten (41a, 42a) befindet.

2. Elektrischer Verbinder (1) nach Anspruch 1, der mehrere Verbindungsanschlüsse (4) umfasst, die in dem Verbindergehäuse (2) befestigt sind, wobei wenigstens einer der Verbindungsanschlüsse (4) wenigstens zwei Befestigungsabschnitte (41a, 42a) zum Befestigen des Anschlusses (4) an der Leiterplatte aufweist.

3. Elektrischer Verbinder (1) nach Anspruch 1 oder Anspruch 2, der ferner eine Schaltungskomponente umfasst,
wobei von wenigstens den beiden Befestigungsabschnitten (41 a, 42a) ein Abschnitt (41a), der sich mit Bezug auf die Einführungsrichtung (A) der Speicherkarte (6) hinten befindet, elektrisch mit der Schaltungskomponente verbunden ist,
während ein Abschnitt (42a), der sich in Bezug auf die Einführungsrichtung (A) der Speicherkarte (6) vorne befindet, mit der Schaltungskomponente nicht elektrisch verbunden ist.

## Revendications

1. Un connecteur électrique (1) destiné à relier une carte mémoire (6) à une carte circuit (5),
ledit connecteur électrique (1) comprenant
un boîtier (2) destiné à recevoir et à retenir la carte mémoire (6),
et une borne de connexion (4) fixée dans le boîtier (2) destinée à établir une connexion électrique entre un contact de la carte mémoire (6) et un composant de circuit de la carte circuit (5),
la borne de connexion (4) possédant une partie (43) capable d'établir un contact électrique avec le contact de la carte mémoire (6) lorsqu'elle est retenue par le boîtier (2),
la borne de connexion (4) comprenant au moins deux parties de fixation (41a, 42a) espacées l'une de l'autre et destinées à fixer la borne (4) à la carte circuit (5),
**caractérisé en ce que**
les deux parties de fixation (41 a, 42a) sont pliées de façon à définir des échelons à partir d'un corps principal de la borne de connexion (4) pour une connexion avec la carte circuit (5),
la partie (43) capable d'établir un contact électrique avec le contact de la carte mémoire (6) est une partie de la borne de connexion (4) qui est pliée dans une direction parallèle à la direction d'insertion (A) de la carte mémoire (6), et
la partie (43) qui est pliée dans la direction parallèle à la direction d'insertion (A) de la carte mémoire (6) est située entre deux des parties de fixation (41a, 42a) espacées l'une de l'autre.

2. Un connecteur électrique (1) selon la Revendication 1, comprenant une pluralité de bornes de connexion (4) fixées dans le boîtier (2) du connecteur où au moins une des bornes de connexion (4) comprend au moins deux parties de fixation (41a, 42a) destinées à fixer la borne (4) à la carte circuit (5).

3. Un connecteur électrique (1) selon la Revendication 1 ou 2, comprenant en outre un composant de circuit,
où, à partir d'au moins les deux parties de fixation (41a, 42a), une partie (41 a) située vers l'arrière par rapport à la direction d'insertion (A) de la carte mémoire (6) est reliée électriquement au composant de circuit,
alors qu'une partie (42a) située vers l'avant par rapport à la direction d'insertion (A) de la carte mémoire (6) n'est pas reliée électriquement au composant de circuit.
